# EUROPEAN PATENT APPLICATION

(11) **EP 3 756 874 A2**
(43) Date of publication of application: **30.12.2020**
(21) Application number: 20182120.4
(22) Date of filing: 24.06.2020
(51) Int. Cl.: B29D 11/00

(54) **PINHOLE CONTACT LENS FORMING JIG**

(30) Priority: 28.06.2019 JP 2019122082
(71) Applicant: Seed Co., Ltd., Tokyo 113-8402 (JP)
(72) Inventor: UENO, Yuki, Tokyo 113-8402 (JP)
(74) Representative: Schulz Junghans Patentanwälte PartGmbB

(57) **Abstract**

A method for efficiently and stably manufacturing a pinhole contact lens having a desired number and positions of pinholes, and a jig for manufacturing the pinhole contact lens. The jig includes a first male portion and a second male portion, a female portion, and a pinhole forming member. In the jig, the pinhole forming member includes a first column-shaped portion having a first outer diameter, and a second column-shaped portion having a second outer diameter larger than the first outer diameter, and the first and second column-shaped portions are vertically stacked on each other. The second male portion includes a coloring agent inflow hole extending through a protruding portion from a leading end to a rear end of the protruding portion. The female portion includes recessed portions on an upper surface side and a lower surface side, the recessed portions being designed to be fit a protruding portion of the first male portion and the protruding portion of the second male portion, respectively, and an insertion hole into which the pinhole forming member is to be inserted, the insertion hole extending through the recessed portions on the upper surface side and the lower surface side, and having a diameter larger than the first outer diameter and smaller than the second outer diameter. The recessed portions of the female portion inclu de, on the inner side thereof, an engagement portion to be in contact with a part of the leading end of the protruding portion of the respective male portions to be fitted. The first male portion and the female portion are designed so that, if the first male portion and the female portion are fitted together, the contact lens is sandwiched between a part of the leading end of the protruding portion of the first male portion and the engagement portion. The pinhole forming member is designed so that if the pinhole forming member is inserted into the insertion hole from the lower surface side of the female portion, an end of the first column-shaped portion comes into surface contact with the contact lens sandwiched between the first male portion and the female portion, and an end of the second column-shaped portion comes into surface contact with the leading end of the protruding portion of the second male portion.

## Description

### BACKGROUND OF THE INVENTION

### Technical Field

The present invention relates to a jig for forming a pinhole contact lens having a colored portion near a central portion and a non-colored portion being a pinhole.

### Background Art

Ophthalmic devices such as eyeglasses and contact lenses are used as devices for correcting refractive errors of the eyes such as myopia, hyperopia, presbyopia, and astigmatism, and obtaining a normal image by focusing on the retina. Various types of ophthalmic devices according to the form of refractive error are sold to persons with refractive errors having the above-mentioned symptoms of refractive errors.

However, some persons with a refractive error have not only one kind of refractive error but also symptoms that are a combination of two or more types of refractive errors, such as myopia, presbyopia and astigmatism. It is said that it is difficult to correct such two or more types of refractive errors with a contact lens, and it is particularly difficult to correct the vision of a patient having astigmatism and presbyopia.

In recent years, a pinhole contact lens has been known as a new device for correcting visual acuity utilizing the pinhole effect (for example, see Patent Document 1 and Patent Document 2). The pinhole contact lens has a configuration in which a plurality of fine non-colored portions are arranged on an opaquely shielded optical surface. Further, a jig for coloring an iris portion of a contact lens and a manufacturing method thereof are described in Patent Document 3.

When external light is introduced through a pinhole contact lens, the incident light becomes narrower while passing through the pinhole, so that the refractive index of the light passing through the pinhole becomes smaller in a crystalline lens and the depth of focus becomes deeper. The depth of focus indicates the range of the distance in focus when the focus on the subject shifts back and forth, and therefore, the more the depth of focus, the less the blurring of the image due to the focus shift. In other words, a pinhole contact lens that can increase the depth of focus is capable of increasing the focusing distance, and is also capable of correcting various refractive errors by a single design, and is therefore able to widen the range of vision of the wearer.

### Prior Art Document

### Patent Document

Patent Document 1: WO2011/048953 pamphlet
Patent Document 2: Japanese Unexamined Patent Application Publication No. 2013-210450
Patent Document 3: Japanese Unexamined Patent Application Publication No. 2015-049304

### SUMMARY OF THE INVENTION

### Technical Problem

Thus, a pinhole contact lens is very useful for people with refractive errors having symptoms of one or more types of refractive errors. However, a method of manufacturing a pinhole contact lens in an efficient and stable manner has not been known so far.

For example, Patent Document 1 and Patent Document 2 describe that it is possible to set a pinhole in a pinhole contact lens to a desired hole diameter or shape, but a method of manufacturing a pinhole contact lens is not specifically disclosed. Patent Document 3 discloses a method of manufacturing a colored contact lens in which a pupil portion is made colored or non-colored using a dedicated jig, but there is no description about a method of manufacturing a colored contact lens in which a plurality of holes are arranged at desired positions either in a preferred manner or a regular manner.

Therefore, a problem to be solved by the present invention is to provide a method for efficiently and stably manufacturing a pinhole contact lens having a desired number and positions of pinholes and a jig for manufacturing the pinhole contact lens.

### Solution to Problem

To solve the above-described problems, the present inventors first tried to improve the jig described in FIG. 3A of Patent Document 3. According to the jig described in Patent Document 3, by bringing a coloring agent in contact with a jig that sandwiches and fixes the contact lens, the portion of the contact lens that is in contact with a non-coloring tool does not become colored and is maintained in the original state. However, the jig according to Patent Document 3 is used to make a single point portion of a pupil portion of a contact lens non-colored, and is not capable of making a plurality of point portions non-colored, and thus making a plurality of point portions, which are arranged at predetermined intervals, non-colored. Therefore, the present inventors abandoned the plan of improving the jig described in Patent Document 3.

To solve the above-described problems, the present inventors conducted intensive studies, and repeated the process of trial and error with regard to a method of coloring a contact lens, a method of forming a pinhole, and a method of simultaneously achieving them. As a result, a jig having a design in which a pinhole forming member is inserted into an insertion hole provided in a female portion and a contact lens is sandwiched between a male portion and the female portion was created. It was confirmed that by bringing the jig in contact with a coloring agent, it is possible to make a portion near the pupil portion of the contact lens colored by a coloring agent flowing in from a coloring agent inflow hole provided in the female portion and/or the male portion of the jig, and at the same time, keep the portion of the contact lens that is in contact with the pinhole forming member non-colored to form a pinhole.

Further, the present inventors found that by making the pinhole forming member as a structure made of two column-shaped portions having different outer diameters and being vertically stacked on each other, it is possible to form two types of pinholes having different diameters and intervals by changing the orientation of the pinhole forming member upon insertion into the insertion hole. Surprisingly, the present inventors found that by designing the female portion into which the pinhole forming member including two column-shaped portions having different outer diameters is inserted, and two male portions in a way so as to be fitted together while sandwiching both ends of the pinhole forming member, it is possible to prevent the pinhole forming member from falling out of the insertion hole during insertion into the insertion hole and during removal of the contact lens after coloring, and thus, it is possible to manufacture the pinhole contact lens in a more stable manner.

Based on these findings, the present inventors were finally successful in creating a method for efficiently and stably manufacturing a pinhole contact lens having a desired number and positions of pinholes, and a jig for manufacturing such a pinhole contact lens. The present invention is an invention that has been completed based on such findings and successful examples.

Therefore, according to one aspect of the present invention, the following jig and method are provided.
[1] A pinhole contact lens forming jig for forming a pinhole in a contact lens, the jig comprising:
   a first male portion and a second male portion;
   a female portion; and
   a pinhole forming member, wherein
   the pinhole forming member includes a first column-shaped portion having a first outer diameter, and a second column-shaped portion having a second outer diameter larger than the first outer diameter, the first and second column-shaped portions being vertically stacked on each other,
   the second male portion includes a coloring agent inflow hole extending through a protruding portion from a leading end to a rear end of the protruding portion,
   the female portion includes
      recessed portions on an upper surface side and a lower surface side, the recessed portions being designed to be fittable to a protruding portion of the first male portion and the protruding portion of the second male portion, respectively, and
      an insertion hole into which the pinhole forming member is to be inserted, the insertion hole extending through the recessed portions on the upper surface side and the lower surface side, and having a diameter larger than the first outer diameter and smaller than the second outer diameter,
   the recessed portions of the female portion include, on the inner side thereof, an engagement portion to be in contact with a part of the leading end of the protruding portion of the respective male portions to be fitted,
   the first male portion and the female portion are designed so that, if the first male portion and the female portion are fitted together, the contact lens is sandwiched between a part of the leading end of the protruding portion of the first male portion and the engagement portion, and
   the pinhole forming member is designed so that if the pinhole forming member is inserted into the insertion hole from the lower surface side of the female portion, an end of the first column-shaped portion comes into surface contact with the contact lens sandwiched between the first male portion and the female portion, and an end of the second column-shaped portion comes into surface contact with the leading end of the protruding portion of the second male portion.
[2] The jig according to [1], wherein
   the female portion includes a coloring agent inflow hole through which a coloring agent flows, the coloring agent inflow hole extending through the recessed portions on the upper surface side and the lower surface side.
[3] A pinhole contact lens forming jig for forming a pinhole in a contact lens, the jig comprising:
   a first male portion and a second male portion;
   a female portion; and
   a pinhole forming member, wherein
   the pinhole forming member includes a first column-shaped portion having a first outer diameter, and a second column-shaped portion having a second outer diameter larger than the first outer diameter, the first and second column-shaped portions being vertically stacked on each other,
   the female portion includes
      recessed portions on an upper surface side and a lower surface side, the recessed portions being designed to be fittable to a protruding portion of the first male portion and a protruding portion of the second male portion, respectively,
      an insertion hole into which the pinhole forming member is to be inserted, the insertion hole extending through the recessed portions on the upper surface side and the lower surface side, and having a diameter larger than the first outer diameter and smaller than the second outer diameter, and
      a coloring agent inflow hole through which a coloring agent flows, the coloring agent inflow hole extending through a side surface portion,
   the recessed portions of the female portion include, on the inner side thereof, an engagement portion to be in contact with a part of a leading end of the protruding portion of the respective male portions to be fitted,
   the first male portion and the female portion are designed so that, if the first male portion and the female portion are fitted together, the contact lens is sandwiched between a part of the leading end of the protruding portion of the first male portion and the engagement portion, and
   the pinhole forming member is designed so that if the pinhole forming member is inserted into the insertion hole from the lower surface side of the female portion, an end of the first column-shaped portion comes into surface contact with the contact lens sandwiched between the first male portion and the female portion, and an end of the second column-shaped portion comes into surface contact with the leading end of the protruding portion of the second male portion.
[4] The jig according to [3], wherein
   the female portion includes a coloring agent inflow hole through which the coloring agent flows, the coloring agent inflow hole extending through the recessed portions on the upper surface side and the lower surface side.
[5] A pinhole contact lens forming jig for forming a pinhole in a contact lens, the jig comprising:
   a first male portion and a second male portion;
   a female portion; and
   a pinhole forming member, wherein
   the female portion includes
      recessed portions on an upper surface side and a lower surface side, the recessed portions being designed to be fittable to a protruding portion of the first male portion and a protruding portion of the second male portion, respectively, and
      an insertion hole into which the pinhole forming member is to be inserted, the insertion hole extending through the recessed portions on the upper surface side and the lower surface side,
   the recessed portions on the upper surface side of the female portion include, on the inner side thereof, an engagement portion to be in contact with a part of a leading end of the protruding portion of the first male portion to be fitted,
   the second male portion and the female portion include a coloring agent inflow hole through which a coloring agent flows, the coloring agent inflow hole being designed, if the second male portion and the female portion are fitted together, to be a through hole extending from the lower surface side of the second male portion to the recessed portion on the upper surface side of the female portion,
   the first male portion and the female portion are designed so that, if the first male portion and the female portion are fitted together, the contact lens is sandwiched between a part of the leading end of the protruding portion of the first male portion and the engagement portion, and
   the pinhole forming member is designed so that if the pinhole forming member is inserted into the insertion hole, one of leading ends of the pinhole forming member comes into surface contact with the contact lens sandwiched between the first male portion and the female portion, and the other of leading ends of the pinhole forming member comes into surface contact with the leading end of the protruding portion of the second male portion.
[6] A pinhole contact lens forming jig for forming a pinhole in a contact lens, the jig comprising:
   a first male portion and a second male portion;
   a female portion; and
   a pinhole forming member, wherein
   the female portion includes
      recessed portions on an upper surface side and a lower surface side, the recessed portions being designed to be fittable to a protruding portion of the first male portion and a protruding portion of the second male portion, respectively,
      an insertion hole into which the pinhole forming member is to be inserted, the insertion hole extending through the recessed portions on the upper surface side and the lower surface side, and
      a coloring agent inflow hole through which a coloring agent flows, the coloring agent inflow hole extending through a side surface portion,
   the recessed portions on the upper surface side of the female portion include, on the inner side thereof, an engagement portion to be in contact with a part of a leading end of the protruding portion of the first male portion to be fitted,
   the first male portion and the female portion are designed so that, if the first male portion and the female portion are fitted together, the contact lens is sandwiched between a part of the leading end of the protruding portion of the first male portion and the engagement portion, and
   the pinhole forming member is designed so that if the pinhole forming member is inserted into the insertion hole, one of leading ends of the pinhole forming member comes into surface contact with the contact lens sandwiched between the first male portion and the female portion, and the other of leading ends of the pinhole forming member comes into surface contact with the leading end of the protruding portion of the second male portion.
[7] A pinhole contact lens forming jig for forming a pinhole in a contact lens, the jig comprising:
   a first male portion and a second male portion;
   a female portion; and
   a pinhole forming member, wherein
   the female portion includes
      recessed portions on an upper surface side and a lower surface side, the recessed portions being designed to be fittable to a protruding portion of the first male portion and a protruding portion of the second male portion, respectively,
      an insertion hole into which the pinhole forming member is to be inserted, the insertion hole extending through the recessed portions on the upper surface side and the lower surface side, and
      a coloring agent inflow hole through which a coloring agent flows, the coloring agent inflow hole extending through a side surface portion,
   the recessed portions of the female portion include, on the inner side thereof, an engagement portion to be in contact with a part of a leading end of the protruding portion of the respective male portions to be fitted,
   the first male portion and the female portion are designed so that, if the first male portion and the female portion are fitted together, the contact lens is sandwiched between a part of the leading end of the protruding portion of the first male portion and the engagement portion, and
   the pinhole forming member is designed so that if the pinhole forming member is inserted into the insertion hole, one of leading ends of the pinhole forming member comes into surface contact with the contact lens sandwiched between the first male portion and the female portion, and the other of leading ends of the pinhole forming member comes into surface contact with the leading end of the protruding portion of the second male portion.
[8] The jig according to [7], wherein
   the female portion includes a coloring agent inflow hole through which the coloring agent flows, the coloring agent inflow hole extending through the recessed portions on the upper surface side and the lower surface side.
[9] A pinhole contact lens forming jig for forming a pinhole in a contact lens, the jig comprising:
   a first male portion;
   a female portion; and
   a pinhole forming member, wherein
   the female portion includes
      a recessed portion designed to be fittable to a protruding portion of the first male portion,
      an insertion hole into which the pinhole forming member is to be inserted, and
      a coloring agent inflow hole through which a coloring agent flows, the coloring agent inflow hole extending through a side surface portion,
   the recessed portion of the female portion include, on the inner side thereof, an engagement portion to be in contact with a part of a leading end of the protruding portion of the first male portion to be fitted,
   the first male portion and the female portion are designed so that, if the first male portion and the female portion are fitted together, the contact lens is sandwiched between a part of the leading end of the protruding portion of the first male portion and the engagement portion, and
   the pinhole forming member is designed so that if the pinhole forming member is inserted into the insertion hole, one of leading ends of the pinhole forming member comes into surface contact with the contact lens sandwiched between the first male portion and the female portion.
[10] A method of forming a pinhole contact lens using the jig according to any one of [1] to [8], the method comprising:
   inserting the pinhole forming member into the insertion hole;
   fitting together the first male portion and the female portion, so that a contact lens is sandwiched between a part of the leading end of the protruding portion in the first male portion and the engagement portion provided in the recessed portion of the female portion, and fitting together the second male portion and the female portion;
   bringing the jig including the first male portion, the female portion, and the second male portion, which are fitted together, into contact with a coloring agent to form a colored portion and a non-colored portion being a pinhole on the surface of the contact lens; and
   removing the contact lens from the jig.
[11] A method of forming a pinhole contact lens using the jig according to [4] or [8], the method comprising:
   inserting the pinhole forming member into the insertion hole;
   fitting together the first male portion and the female portion, so that a first contact lens is sandwiched between a part of the leading end of the protruding portion in the first male portion and the engagement portion provided in the recessed portion of the female portion, and fitting together the second male portion and the female portion, so that a second contact lens is sandwiched between a part of the leading end of the protruding portion in the second male portion and the engagement portion provided in the recessed portion of the female portion;
   bringing the jig including the first male portion, the female portion, and the second male portion, which are fitted together, into contact with a coloring liquid to form a colored portion and a non-colored portion being a pinhole on the surface of the first and second contact lenses; and
   removing the first and the second contact lenses from the pinhole contact lens forming jig.
[12] A method of forming a pinhole contact lens using the jig according to [9], the method comprising:
   inserting the pinhole forming member into the insertion hole;
   fitting together the first male portion and the female portion, so that a contact lens is sandwiched between a part of the leading end of the protruding portion in the first male portion and the engagement portion provided in the recessed portion of the female portion;
   bringing the jig including the first male portion and the female portion, which are fitted together, into contact with a coloring agent to form a colored portion and a non-colored portion being a pinhole on the surface of the contact lens; and
   removing the contact lens from the jig.

### Advantageous Effects of Invention

According to the present invention, by inserting the pinhole forming member into the insertion hole provided in the female portion, and then sandwiching the contact lens between the male portion and the female portion, and coloring the contact lens, it is possible to efficiently and stably manufacture a pinhole contact lens having the desired number and positions of pinholes.

Further, according to the present invention, by using a pinhole forming member having different shapes at both ends, it is possible to form pinholes having different diameters and intervals, thereby improving versatility. According to the present invention, it is possible to manufacture two pinhole contact lenses having two types of pinholes with the same or different shapes by a single coloring process.

### BRIEF DESCRIPTION OF THE DRAWINGS

FIG. 1 is a perspective view of a first male portion in a jig according to a first aspect of the present invention.
FIG. 2 is a perspective view of a female portion in the jig according to the first aspect of the present invention.
FIG. 3 is a perspective view of a second male portion in the jig according to the first aspect of the present invention.
FIG. 4 is a perspective view of the first male portion and the second male portion, and the female portion in which a pinhole forming member is inserted into an insertion hole in the jig according to the first aspect of the present invention.
FIG. 5 is a perspective view of a state where the first male portion, the female portion, and the second male portion are fitted together and combined in the jig according to the first aspect of the present invention.
FIGS. 6A to 6C are a cross-sectional view and a perspective view of the jig according to the first aspect of the present invention. FIG. 6A is a cross-sectional view of the first male portion, the female portion, the pinhole forming member, and the second male portion. FIG. 6B is a perspective view of the pinhole forming member. FIG. 6C is a cross-sectional view of a state where a contact lens is sandwiched between the first male portion and the female portion in which the pinhole forming member is inserted, and the second male portion and the female portion are fitted together and combined.
FIGS. 7A to 7C are plan views of the jig according to the first aspect of the present invention.

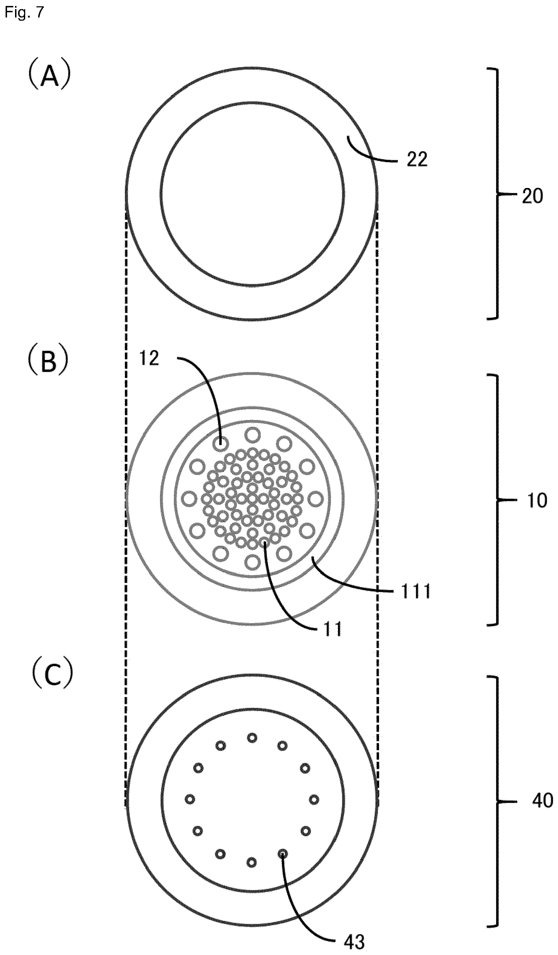

FIG. 7A is a plan view of the first male portion (a protruding portion side). FIG. 7B is a plan view of the female portion (an upper surface side and a lower surface side). FIG. 7C is a plan view of the second male portion (a protruding portion side).

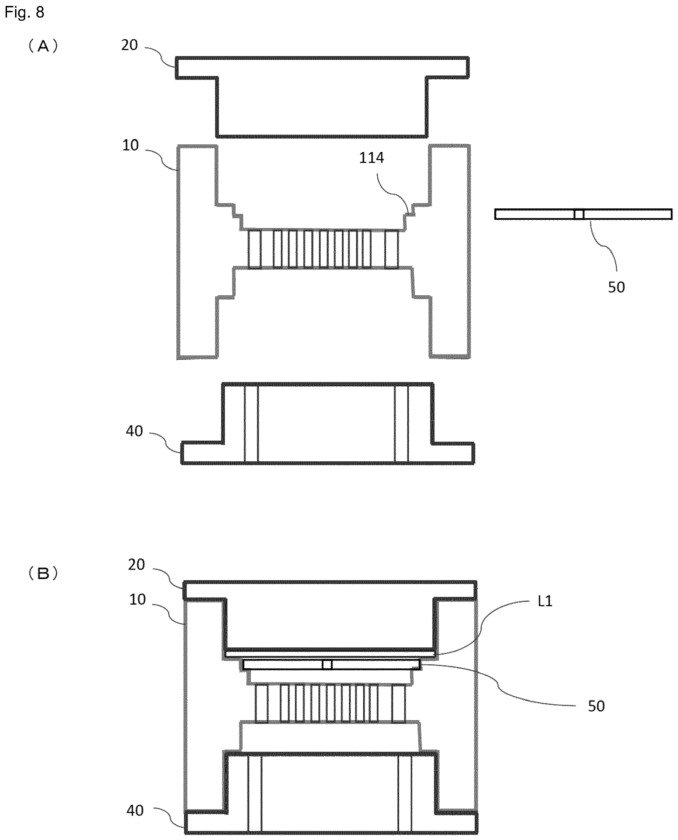

FIGS. 8A and 8B are a cross-sectional view of the jig according to the first aspect of the present invention. FIG. 8A is a cross-sectional view of a jig provided with a central portion dyeing member. FIG. 8B is a cross-sectional view of a state where a contact lens and a central portion dyeing member are sandwiched between the first male portion and the female portion, and the second male portion and the female portion are fitted together and combined.

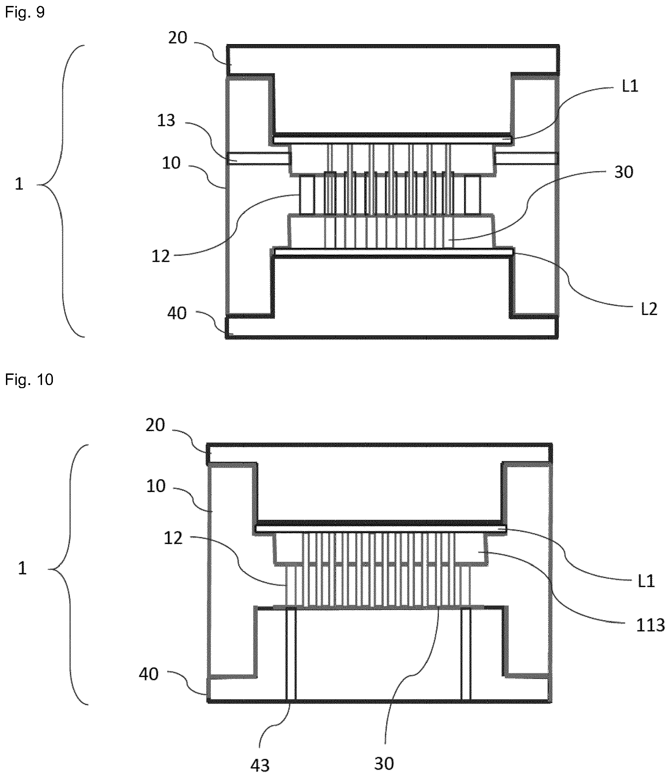

FIG. 9 is a cross-sectional view of a jig according to a second aspect of the present invention.
FIG. 10 is a cross-sectional view of a jig according to a third aspect of the present invention.

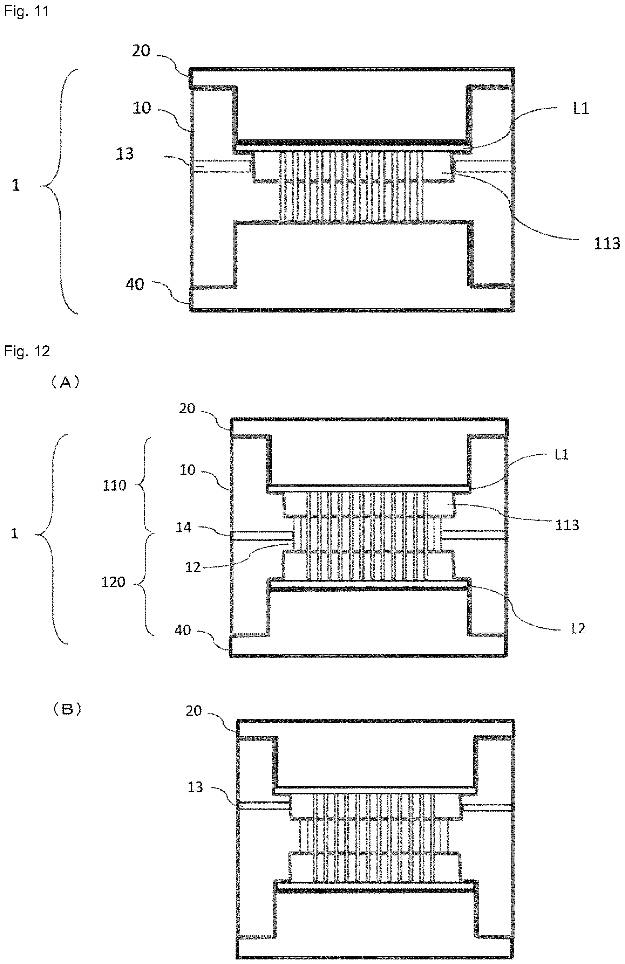

FIG. 11 is a cross-sectional view of a jig according to a fourth aspect of the present invention.
FIGS. 12A and 12B are cross-sectional views of a jig according to a fifth aspect of the present invention. FIG. 12A is a cross-sectional view of an aspect where a female portion 10 includes, in a part of the female portion 10 between a bottom surface of a recessed portion 110 on the upper surface side and a bottom surface of a recessed portion 120 on the lower surface side, a coloring agent inflow hole 12 and a coloring agent inflow hole 14. FIG. 12B is a cross-sectional view of an aspect where the female portion 10 includes the coloring agent inflow hole 12, and a coloring agent inflow hole 13 extending through a side surface portion of the recessed portion 110 on the upper surface side.

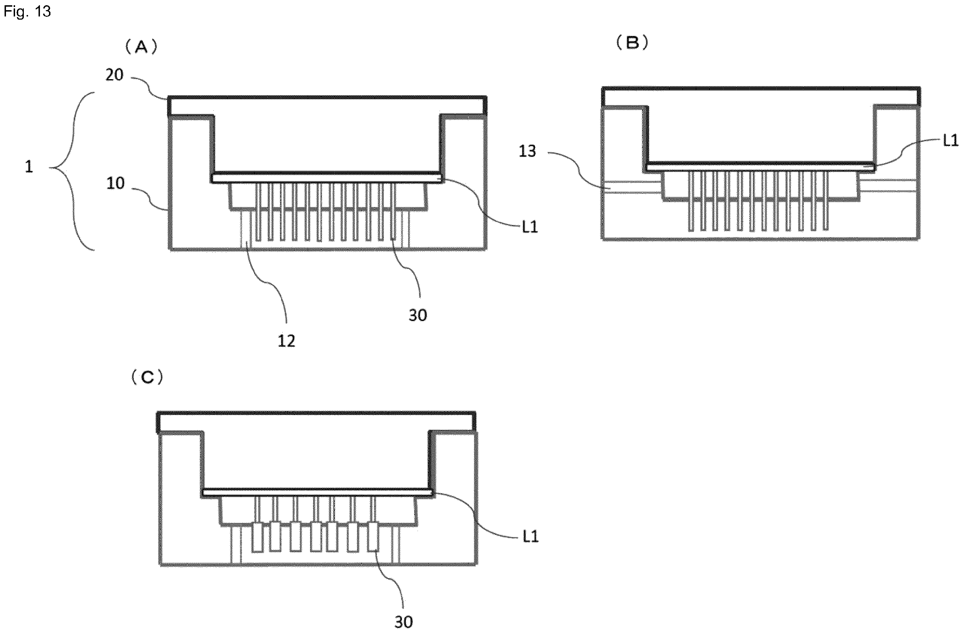

FIGS. 13A to 13C are a cross-sectional view of a jig according to a sixth aspect of the present invention. FIG. 13A is a cross-sectional view of an aspect where the female portion 10 includes the coloring agent inflow hole 12 extending through a rear end (a bottom surface of a recessed portion). FIG. 13B is a cross-sectional view of an aspect where the female portion 10 includes the coloring agent inflow hole 13 extending through a side surface portion.
FIG. 13C is a cross-sectional view of an aspect using a pinhole forming member 30 having a structure in which two types of members having different diameters are vertically stacked on each other.

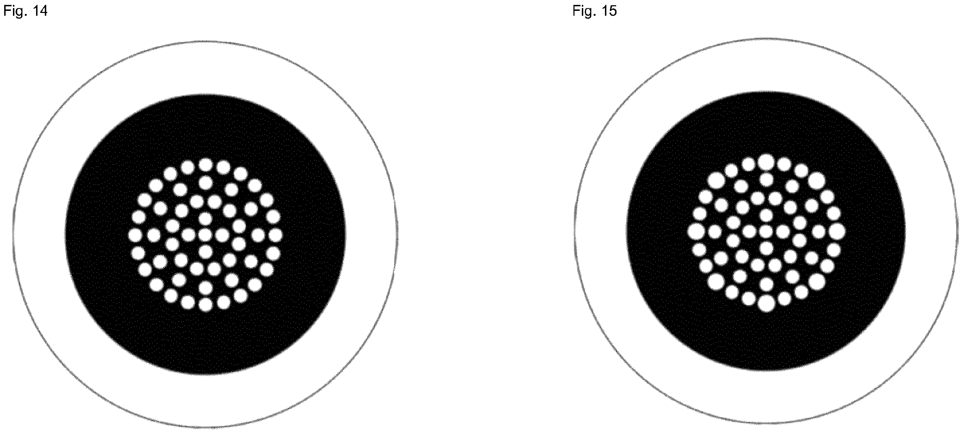

FIG. 14 illustrates a plan view of the pinhole contact lens 1 as described in examples described later.
FIG. 15 illustrates a plan view of the pinhole contact lens 2 as described in examples described later.

### DESCRIPTION OF EMBODIMENTS

Hereinafter, the details of the present invention will be described with reference to the drawings as appropriate, but the technical scope of the present invention is not limited only to the matters of this section, and the present invention can have various modifications as long as the object is achieved.

Unless otherwise specified, the terms in the specification are used in the sense commonly used by one skilled in the art and should not be construed as having an unduly restrictive meaning. Further, since the speculations and theories made in this specification have been made based on the knowledge and experience of the present inventors, the technical scope of the present invention cannot be constrained only by such speculations and theories.

"And/or" means any one or all of the combinations of any one or two or more of the plurality of listed related items.

"to" in the numerical range is a range including the previous and later numerical values, for example, "0% to 100%" means a range of 0% or more and 100% or less.

"Monomer" means a compound having one or more polymerizable groups being functional groups that can be polymerized in a molecule, and that is capable of forming a polymer by a copolymerization reaction.

### [Jig according to First Aspect]

The jig according to a first aspect of the present invention includes two male portions, a female portion, and a pinhole forming member. The female portion has two recessed portions on the upper surface side and the lower surface side. That is, the female portion has a configuration in which a recessed portion is combined with a recessed portion oriented in the opposite direction. Each of the two recessed portions of the female portion is designed to be fittable to the protruding portion of the two male portions.

The recessed portion on the upper surface side of the female portion is provided, on the inner side, with an engagement portion that is in contact with a part of the leading end of the protruding portion in the first male portion. Similarly, the recessed portion on the lower surface side of the female portion is provided, on the inner side, with an engagement portion that is in contact with a part of the leading end of the protruding portion in the second male portion.

If the first male portion and the female portion are fitted together, a part of the leading end of the protruding portion in the first male portion comes into surface contact with the engagement portion provided on the inner side the female portion and stops, and the position of the leading end of the protruding portion in the first male portion becomes the position of the engagement portion. By placing the contact lens on the engagement portion and fitting together the first male portion and the female portion, the contact lens can be sandwiched between the first male portion and the female portion.

If the first male portion and the female portion are fitted together, since there is a recess on the inner side of the engagement portion in the recessed portion of the female portion, a space is formed that is surrounded by both side surfaces and the lower surface of the recess and a part of the surface of the leading end of the protruding portion in the first male portion, that is not in contact with the engagement portion. It is possible to store the coloring agent flowing in from the outside in the space. The space is called a coloring agent storage portion.

The female portion includes one or more insertion holes through which one or more pinhole forming members are inserted, and the insertion holes are through holes extending from the bottom surface of the recessed portion on the upper surface side to the bottom surface of the recessed portion on the lower surface side. The pinhole forming member includes a first column-shaped portion having a first outer diameter, and a second column-shaped portion having a second outer diameter larger than the first outer diameter, and the column-shaped portions are vertically stacked on each other. The diameter of the insertion hole of the female portion is larger than the first outer diameter and smaller than the second outer diameter of the pinhole forming member. If the pinhole forming member is inserted into the insertion hole from the lower surface side of the female portion, the first column-shaped portion in the pinhole forming member can pierce through the insertion hole, but the second column-shaped portion cannot enter into the insertion hole. Therefore, in this case, the second column-shaped portion serves as a stopper, and prevents the pinhole forming member from piercing through the insertion hole.

The pinhole forming member is designed so that if the pinhole forming member is inserted into the insertion hole from the lower surface side of the female portion, an end of the first column-shaped portion comes into surface contact with the contact lens sandwiched between the first male portion and the female portion, and an end of the second column-shaped portion comes into surface contact with the leading end of the protruding portion of the second male portion. Therefore, the distance from the leading end of the protruding portion in the first male portion to the leading end of the protruding portion in the second male portion in a state where the first and second male portions and the female portion are fitted together is the length of the pinhole forming member. Further, at this time, the length of the first column-shaped portion in the pinhole forming member corresponds to the distance from the leading end of the protruding portion in the first male portion to the bottom surface of the recessed portion on the lower surface side of the female portion, and the length of the second column-shaped portion in the pinhole forming member corresponds to the distance from the leading end of the protruding portion in the second male portion to the bottom surface of the recessed portion on the lower surface side of the female portion.

The jig according to the first aspect of the present invention includes a coloring agent inflow hole which is a hole extending from the leading end through to a rear end of the protruding portion of the second male portion.

If the second male portion includes the coloring agent inflow hole, and the first and second male portions and the female portion are fitted together without inserting the pinhole forming member into at least one of the insertion holes provided in the female portion, and the coloring agent flows into the jig through the coloring agent inflow hole of the second male portion, the coloring agent flows into the coloring agent storage portion through that insertion hole. At this time, if it is desired to insert the pinhole forming members into all the insertion holes provided in the female portion, a coloring agent inflow hole, which is a through hole extending from the bottom surface of the recessed portion on the upper surface side of the female portion to the bottom surface of the recessed portion on the lower surface side and through which the coloring agent can flow, may be provided separately.

If the female portion includes the coloring agent inflow hole, by causing the coloring agent to flow through the coloring agent inflow hole, the coloring agent can flow into the coloring agent storage portion. In this case, it is not necessary to provide a coloring agent inflow hole in the recessed portion of the female portion.

By inserting the pinhole forming member into the insertion hole from the lower surface side of the female portion, then fitting together the second male portion and the female portion, and then placing the contact lens on the engagement portion provided in the recessed portion on the upper surface side of the female portion, and fitting together the first male portion and the female portion, and feeding the coloring agent to the coloring agent storage portion through the coloring agent inflow hole, it is possible to obtain a pinhole contact lens in which the portion in contact with the coloring agent is colored and the portion in contact with the end of the first column-shaped portion of the pinhole forming member is non-colored. Thus, the pinhole does not refer to a fine hole, but refers to a part where the color of the contact lens base is maintained without being colored.

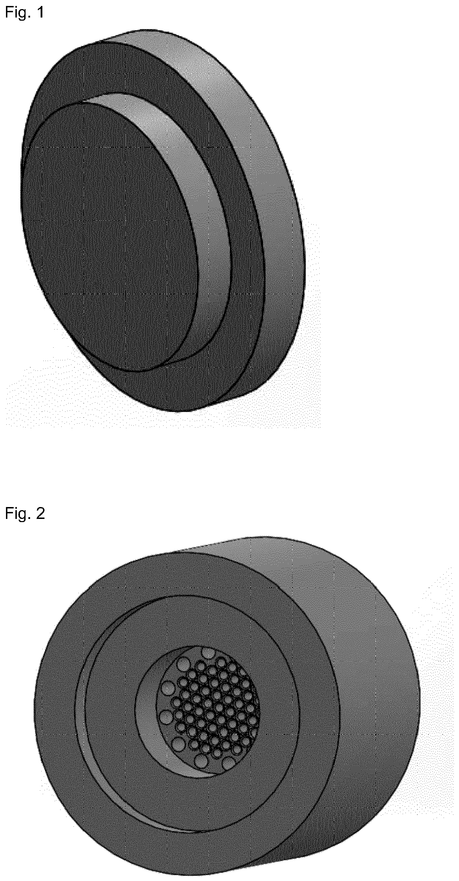

As a specific aspect of the first aspect of the present invention, a jig according to an aspect where the second male portion includes a coloring agent inflow hole, and the female portion includes a coloring agent inflow hole extending through the recessed portion, will be described with reference to FIGS. 1 to 5, FIGS. 6A to 6C, FIGS. 7A to 7C, and FIGS. 8A and 8B.

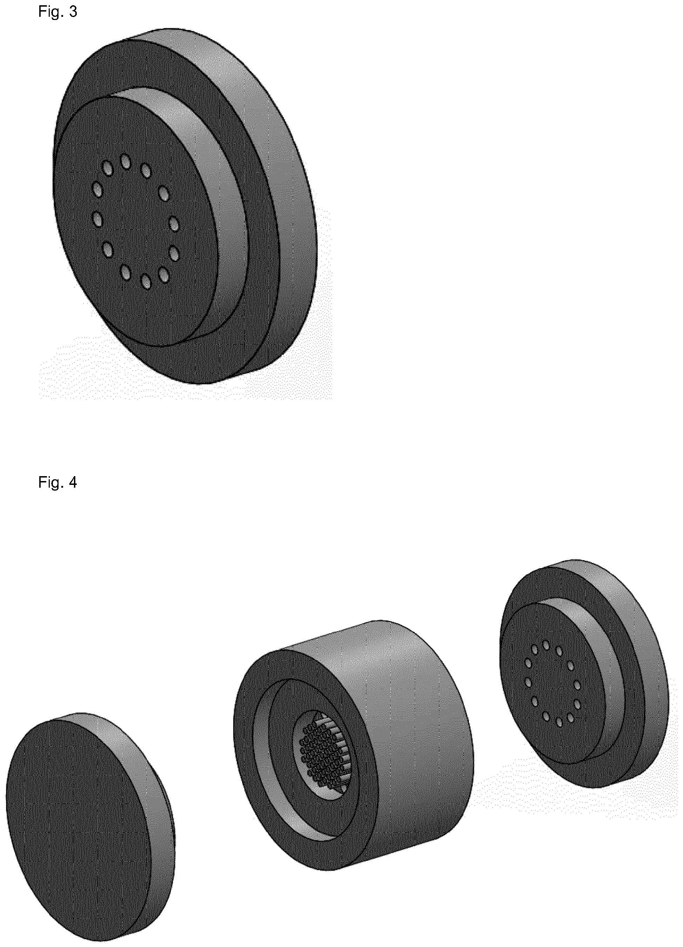

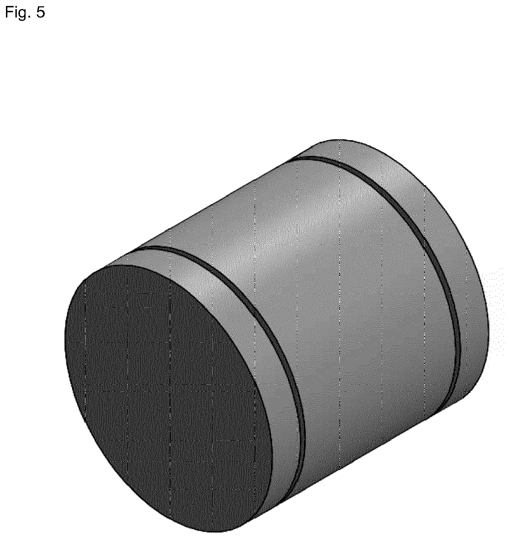

FIGS. 1 to 3 illustrate the perspective views of a first male portion, a female portion, and a second male portion, respectively. FIG. 4 illustrates a perspective view of the first male portion, the second male portion, and the female portion after the pinhole forming member is inserted into the insertion hole. FIG. 5 illustrates a perspective view of an aspect where the first male portion, the female portion, and the second male portion are fitted together and combined.

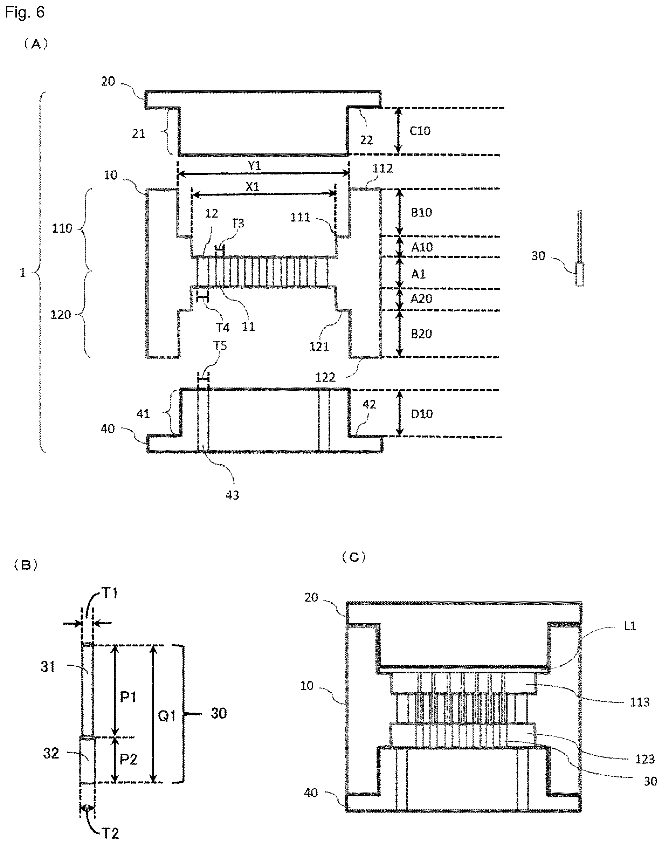

FIG. 6A illustrates a cross-sectional view of the first male portion, the female portion, the pinhole forming member, and the second male portion. FIG. 6B illustrates a perspective view of the pinhole forming member. FIG. 6C illustrates a cross-sectional view of a state where the contact lens is sandwiched between the first male portion and the female portion in which the pinhole forming member is inserted, and the second male portion and the female portion are fitted together and combined.

FIGS. 7A to 7C illustrate plan views of the first male portion (the protruding portion side), the female portion (the upper surface side and the lower surface side), and the second male portion (the protruding portion side), respectively.

FIG. 8A illustrates a cross-sectional view of the jig according to the first aspect including a central portion dyeing member. FIG. 8B illustrates a cross-sectional view of a state where a contact lens and a central portion dyeing member are sandwiched between the first male portion and the female portion, and the second male portion and the female portion are fitted together and combined.

As illustrated in FIGS. 6A to 6C and FIGS. 7A to 7C, when a jig 1 is used as a combination of female portion 10, a first male portion 20 and a second male portion 40. The female portion 10 includes a recessed portion 110 on the upper surface side and a recessed portion 120 on the lower surface side. The first male portion 20 includes a protruding portion 21, and the second male portion 40 includes a protruding portion 41 and one or more coloring agent inflow holes 43. The diameter T5 of the coloring agent inflow hole 43 is not particularly limited as long as it is a diameter through which the coloring agent can flow, and is, for example, 0.5 mm to 1.5 mm.

The recessed portion 110 on the upper surface side and the recessed portion 120 on the lower surface side of the female portion 10 can be fitted together with the protruding portion 21 of the first male portion 20 and the protruding portion 41 of the second male portion 40, respectively. The recessed portion 110 on the upper surface side of the female portion 10 is provided, on the inner side, with an engagement portion 111 that is in contact with a part of the leading end of the protruding portion 21 in the first male portion 20 to be fitted together with. The recessed portion 120 on the lower surface side of the female portion 10 is provided, on the inner side, with an engagement portion 121 that is in contact with a part of the leading end of the protruding portion 41 in the second male portion 40 to be fitted together with.

The female portion 10 includes two or more insertion holes 11 for inserting the pinhole forming member 30, and the insertion holes 11 are through holes extending from the bottom surface of the recessed portion 110 on the upper surface side to the bottom surface of the recessed portion 120 on the lower surface side. The female portion 10 includes a coloring agent inflow hole 12. The diameter T4 of the coloring agent inflow hole 12 is not particularly limited as long as it is a diameter through which the coloring agent can flow, and is, for example, 0.5 mm to 1.5 mm.

The pinhole forming member 30 has a structure in which two column-shaped portions 31 and 32 are vertically stacked on each other. The diameter T1 of the column-shaped portion 31 is smaller than the diameter T2 of the column-shaped portion 32. The diameter T1 of the column-shaped portion 31 is smaller than the diameter T3 of the insertion hole 11, and the diameter T2 of the column-shaped portion 32 is larger than the diameter T3 of the insertion hole 11. The diameter T1 of the column-shaped portion 31, the diameter T2 of the column-shaped portion 32, and the diameter T3 of the insertion hole 11 satisfy the above-described relationship (T2 > T3 > T1), and therefore, if the pinhole forming member 30 is inserted into the insertion hole 11 from the recessed portion 120 on the lower surface side of the female portion 10, an end of the column-shaped portion 31 passes through the insertion hole 11 and a peripheral edge of the column-shaped portion 32 comes in contact with the bottom surface of the recessed portion 120, making the arrangement of the pinhole forming member 30 stable. The diameter T1 of the column-shaped portion 31 may be appropriately set depending on a desired pinhole diameter, and is, for example, 0.05 mm to 1.5 mm, and preferably 0.1 mm to 1.0 mm. The diameter T3 of the insertion hole 11 is, for example, 110% to 300% of the diameter T1 of the column-shaped portion 31. The diameter T2 of the column-shaped portion 32 is, for example, 110% to 300% of the diameter T3 of the insertion hole 11.

The shape of the leading end of the column-shaped portions 31 and 32 is flat, and can have a regular or irregular shape such as a circle, an ellipse, a square, a star, and a crescent as desired, but a circular shape is preferred.

If the first male portion 20 and the female portion 10 are fitted together, a part of the leading end of the protruding portion 21 in the first male portion 20 and the engagement portion 111 in the female portion 10 come into contact with each other, and a flange portion 22 in the first male portion 20 and an engaging portion 112 in the female portion 10 come into contact with each other. At this time, it is possible to sandwich the contact lens between a part of the leading end of the protruding portion 21 in the first male portion 20 and the engagement portion 111 in the female portion 10, which function as fixing portions of the contact lens.

The width of the engagement portion 111 of the female portion 10 is not particularly limited, but is preferably in the range of 1 mm to 5 mm, for example, from the viewpoint that the width is sufficient to mount a contact lens.

By designing the width of the engaging portion 112 of the female portion 10 and the width of the flange portion 22 of the first male portion 20 to be substantially the same value, the play between the female portion 10 and the first male portion 20 is reduced after fitting, because of which the overall displacement of the jig 1 is suppressed, and it is possible to stably supply a pinhole contact lens having a pinhole at a desired position. The width of the engaging portion 112 of the female portion 10 and/or the width of the flange portion 22 of the first male portion 20 is not particularly limited, but is, for example, in a range of 1 mm to 5 mm.

If the first male portion 20 and the female portion 10 are fitted together, a coloring agent storage portion 113 being a void is formed on the inner side of the engagement portion 111 of the female portion 10. The volume and dimensions of the coloring agent storage portion 113 are not particularly limited as long as it is possible to store a sufficient amount of the coloring agent. The height A10 of the coloring agent storage portion 113 is, for example, 1.0 mm to 10 mm.

Similarly to the relationship between the first male portion 20 and the female portion 10, if the second male portion 40 and the female portion 10 are fitted together, a part of the leading end of the protruding portion 41 in the second male portion 40 and the engagement portion 121 in the female portion 10 come into contact with each other, and a flange portion 42 in the second male portion 40 and an engaging portion 122 in the female portion 10 come into contact with each other. At this time, a coloring agent storage portion 123 being a void is formed on the inner side of the engagement portion 121 of the female portion 10.

The length P1 of the column-shaped portion 31 of the pinhole forming member 30 corresponds to the total length of the depth A1 of the insertion hole 11 and the height A10 of the coloring agent storage portion 113. The length P2 of the column-shaped portion 32 of the pinhole forming member 30 corresponds to the height A20 of the coloring agent storage portion 123. Since the length P1 of the column-shaped portion 31 and the length P2 of the column-shaped portion 32 satisfy such a relationship, if the pinhole forming member 30 is inserted into the insertion hole 11 from the bottom surface of the recessed portion 120 on the lower surface side of the female portion 10, the end of the column-shaped portion 31 comes into contact with the contact lens L1 sandwiched between the first male portion 20 and the female portion 10, and the end of the column-shaped portion 32 comes in contact with the leading end of the protruding portion 41 of the second male portion 40.

The relationship between the length P1 of the column-shaped portion 31 and the length P2 of the column-shaped portion 32 is not particularly limited, but for example, P1 : P2 may be a relationship such as 1 : 0.1 to 1: 5, preferably 1 : 0.1 to 1 : 2, more preferably 1 : 0.2 to 1 : 1.

To reduce the wobble and the difficulty of removal, and maintain the pinhole forming member 30 in the insertion hole 11, the length P1 of the column-shaped portion 31 is preferably 150% to 500% with respect to the depth A1 of the insertion hole 11, and/or the length P2 of the column-shaped portion 32 is preferably 80% to 200% with respect to the depth A1 of the insertion hole 11.

The height C10 of the protruding portion 21 of the first male portion 20 is not particularly limited as long as it is substantially the same as the height B10 from the upper surface of the female portion 10 to the engagement portion 111. For example, the height C10 is such that the fitting between the first male portion 20 and the female portion 10 is stable, and is preferably 1 mm to 10 mm. The same is applicable to the height D10 of the protruding portion 41 of the second male portion 40 and the height B20 from the lower surface of the female portion 10 to the engagement portion 121.

The first outer diameter X1 and the second outer diameter Y1 of the female portion 10, and the diameter Z1 of the contact lens L1 are not particularly limited as long as the relationship Y1 ≥ Z1 > X1 is satisfied. For example, the first outer diameter X1 of the female portion 10 is 50% to 95% with respect to the diameter Z1 of the contact lens L1, and the second outer diameter Y1 of the female portion 10 is 100% to 125% with respect to the diameter Z1 of the contact lens L1. The half value of the difference between the second outer diameter Y1 and the first outer diameter X1 corresponds to the width of the engagement portion 111 of the female portion 10.

The jig according to the first aspect of the present invention may include the central portion dyeing member for coloring only a specific part of the contact lens. The central portion dyeing member includes one or more coloring agent inflow holes, which are through holes extending from the upper surface side to the lower surface side. In this case, the female portion includes, on the inner side and at a lower position with respect to the engagement portion in the recessed portion on the upper surface side, a central portion dyeing member mounting part on which the central portion dyeing member can be mounted. By using the central portion dyeing member, it is possible to form, without using the pinhole forming member, a colored portion on the surface of the contact lens correspondingly to the position of the coloring agent inflow hole provided in the central portion dyeing member.

FIGS. 8A and 8B illustrate a specific embodiment of the jig according to the first aspect of the present invention including a central portion dyeing member. The female portion 10 includes, on the inner side and at a lower position with respect to the engagement portion 111 in the recessed portion 110 on the upper surface side, a central portion dyeing member mounting part 114. If the central portion dyeing member 50 is placed on the central portion dyeing member mounting part 114 and the first male portion 20 and the female portion 10 are fitted together, the central portion dyeing member 50 is sandwiched and fixed by a part of the leading end of the protruding portion 21 of the first male portion 20 and the central portion dyeing member mounting part 114. Therefore, the height (thickness) of the central portion dyeing member 50 corresponds to the distance from the central portion dyeing member mounting part 114 to the engagement portion 111.

### [Jig according to Second Aspect]

The jig according to the second aspect of the present invention has the same configuration as the jig according to the first aspect of the present invention except for the fact that instead of the second male portion including the coloring agent inflow hole, the female portion includes a coloring agent inflow hole extending through a side surface portion and through which the coloring agent can flow.

In the jig according to the second aspect of the present invention, the female portion includes the coloring agent inflow hole extending through the side surface portion, and therefore, even though the second male portion does not include the coloring agent inflow hole, it is possible to form a pinhole on the surface of the contact lens sandwiched between the first male portion and the female portion by immersing the jig in the coloring agent, for example.

FIG. 9 illustrates a specific embodiment of the jig according to the second aspect of the present invention. The female portion 10 includes a coloring agent inflow hole 13 extending through the side surface portion, and the coloring agent inflow hole 12 extending through the recessed portions on the upper surface side and the lower surface side. In this case, by sandwiching the contact lens L2 between a part of the leading end of the protruding portion 41 in the second male portion 40 and the engagement portion 121 in the female portion 10, it is possible to form a pinhole on the surface of the contact lens L2 correspondingly to the shape of the leading end of the column-shaped portion 32 of the pinhole forming member 30. If a pinhole is to be formed only in the contact lens L1, the coloring agent inflow hole 12 may not be provided. If the coloring agent inflow hole 12 is to be provided, the coloring agent inflow hole that should be provided on the side surface portion of the female portion may be provided in the recessed portion on the lower surface side separately from the recessed portion on the upper surface side, or together with the recessed portion on the upper surface side.

### [Jig according to Third Aspect]

The jig according to the third aspect of the present invention includes at least the first male portion and the second male portion, the female portion, and the pinhole forming member. The relationship between the first male portion and the female portion, and the structure of the second male portion are the same as in the jig according to the first aspect of the present invention.

The female portion in the jig according to the third aspect of the present invention includes an insertion hole designed to enable the pinhole forming member to be inserted from the recessed portion on the upper surface side to the recessed portion on the lower surface side. The recessed portion on the upper surface side of the female portion includes, on the inner side, an engagement portion to be in contact with a part of the leading end of the protruding portion in the first male portion to be fitted together with, but the recessed portion on the lower surface side does not include an engagement portion. Therefore, if the second male portion and the female portion are fitted together, the leading end of the protruding portion of the second male portion comes into surface contact with the recessed portion on the lower surface side of the female portion. At this time, the leading end of the pinhole forming member inserted into the insertion hole of the female portion comes into surface contact with the leading end of the protruding portion of the second male portion.

The second male portion and the female portion include a coloring agent inflow hole designed to form a through hole extend from the lower surface side of the second male portion to the recessed portion on the upper surface side of the female portion, when the second male portion and the female portion are fitted together.

The pinhole forming member may have a uniform diameter, or may include two or more types of members having different diameters and vertically stacked on each other. If the diameter of the pinhole forming member is too small, the pinhole forming member may easily fall out of the insertion hole. In this case, the diameter of a part of the pinhole forming member to be inserted into the insertion hole may be increased to increase the area in contact with the wall surface inside the insertion hole. The same is applicable to the jig according to the fourth aspect to the sixth aspect of the present invention described later.

FIG. 10 illustrates a specific embodiment of the jig according to the third aspect of the present invention. As illustrated in FIG. 10, the coloring agent flows into the jig 1 through the coloring agent inflow hole 43 provided in the second male portion 40 and the coloring agent inflow hole 12 provided in the female portion 10 and is collected in the coloring agent storage portion 113, and reaches the contact lens L1. For example, by immersing the jig 1 in the coloring agent, it is possible to form a pinhole on the surface of the contact lens.

### [Jig according to Fourth Embodiment]

The jig according to the fourth aspect of the present invention has the same configuration as the jig according to the third aspect of the present invention except for the fact that instead of the second male portion including the coloring agent inflow hole, the female portion includes the coloring agent inflow hole extending through the side surface portion.

FIG. 11 illustrates a specific embodiment of the jig according to the fourth aspect of the present invention. For example, by immersing the jig 1 illustrated in FIG. 11 in the coloring agent, it is possible to form a pinhole on the surface of the contact lens.

### [Jig according to Fifth Aspect]

The jig according to the fifth aspect of the present invention includes at least the first male portion and the second male portion, the female portion, and the pinhole forming member. The relationship between the first male portion and the female portion, and the relationship between the second male portion and the female portion is the same as in the jig according to the first aspect of the present invention. However, the second male portion does not have the coloring agent inflow hole, but rather, the female portion has the coloring agent inflow hole extending through the side surface portion.

FIGS. 12A and 12B illustrate a specific embodiment of the jig according to the fifth aspect of the present invention. The female portion 10 illustrated in FIG. 12A includes, in a part of the female portion 10 between the bottom surface of the recessed portion 110 on the upper surface side and the bottom surface of the recessed portion 120 on the lower surface side, the coloring agent inflow hole 12 and the coloring agent inflow hole 14 extending through the side surface portion. On the other hand, the female portion 10 illustrated in FIG. 12B includes the coloring agent inflow hole 12, and the coloring agent inflow hole 13 extending through the side surface portion of the recessed portion 110 on the upper surface side. As a result of the above-described configuration, it is possible to form a pinhole on the surface of the contact lens by immersing the jig 1 illustrated in FIG. 12A and FIG. 12B in the coloring agent, for example.

In the jig illustrated in FIG. 12B, if a pinhole is to be formed only in the contact lens L1, the coloring agent inflow hole 12 may not be provided. If the coloring agent inflow hole 12 is to be provided, the coloring agent inflow hole that should be provided on the side surface portion of the female portion may be provided in the recessed portion on the lower surface side separately from the recessed portion on the upper surface side, or together with the recessed portion on the upper surface side.

### [Jig according to Sixth Aspect]

The jig according to the sixth aspect of the present invention includes at least the first male portion, the female portion, and the pinhole forming member. Therefore, unlike the jig according to the first aspect of the present invention, the jig according to the sixth aspect of the present invention does not include the second male portion.

The female portion in the jig according to the sixth aspect of the present invention includes a recessed portion only on the upper surface side. Although the female portion includes an insertion hole for inserting the pinhole forming member, the insertion hole does not extend through the bottom surface of the recessed portion. In order for the insertion hole to have such a configuration, the bottom surface of the recessed portion of the female portion may be perforated to form a non-through hole, or the bottom surface of the recessed portion of the female portion may be perforated so that a through hole is formed and then a bottom plate may be attached to the bottom surface of the recessed portion of the female portion. The female portion includes a coloring agent inflow hole extending through the rear end or the side surface portion.

FIGS. 13A to 13C illustrate a specific embodiment of the jig according to the sixth aspect of the present invention. The female portion 10 illustrated in FIG. 13A includes the coloring agent inflow hole 12 extending through the rear end (the bottom surface of the recessed portion). On the other hand, the female portion 10 illustrated in FIG. 13B includes the coloring agent inflow hole 13 extending through the side surface portion. Thus, for example, by immersing the jig 1 in the coloring agent, it is possible to form a pinhole on the surface of the contact lens. As illustrated in FIG. 13C, by using the pinhole forming member 30 in which two types of members having different diameters are vertically stacked on each other, it is possible to prevent the pinhole forming member from easily falling out of the insertion hole.

### [Method according to First Aspect]

The method according to the first aspect of the present invention relates to a method of forming a pinhole contact lens using the jig according to the first aspect to the fifth aspect of the present invention. The method according to the first aspect of the present invention includes at least:
inserting the pinhole forming member into the insertion hole;
fitting together the first male portion and the female portion, so that a contact lens is sandwiched between a part of the leading end of the protruding portion in the first male portion and the engagement portion provided in the recessed portion of the female portion, and fitting together the second male portion and the female portion;
bringing the jig including the first male portion, the female portion, and the second male portion, which are fitted together, into contact with a coloring agent to form a colored portion and a non-colored portion being a pinhole on the surface of the contact lens; and
removing the contact lens from the jig.

The method according to the first aspect of the present invention will be specifically described again with reference to FIGS. 6A to 6C, FIGS. 7A to 7C, and FIGS. 8A and 8B illustrating the jig according to the first aspect of the present invention.

As a first step, the pinhole forming member 30 is inserted into the insertion hole 11 of the female portion 10. The number of the pinhole forming members 30 and/or the insertion holes 11 may be any number according to which the desired pinholes can be formed, and is, for example, 2 or more, preferably 20 to 100, and more preferably, 40 to 60.

The contact lens L1 is placed on the engagement portion 111 provided in the recessed portion 110 of the female portion 10, and the first male portion 20 and the female portion 10 are fitted together so that the contact lens L1 is sandwiched between a part of the leading end of the protruding portion 21 in the first male portion 20 and the engagement portion 111. By doing so, the leading end of the column-shaped portion 31 of the pinhole forming member 30 comes into surface contact with the contact lens L1. As a result, the contact lens L1 is sandwiched and fixed between the protruding portion 21 of the first male portion 20 and the pinhole forming member 30 or the engagement portion 111 of the recessed portion 110 of the female portion 10.

The second male portion 40 and the female portion 10 are fitted together. At this time, the second male portion 40 and the female portion 10 may be fitted after fitting together the first male portion 20 and the female portion 10, or the first male portion 20 and the female portion 10 may be fitted after fitting together the second male portion 40 and the female portion 10.

As a third step, the jig 1 composed of the first male portion 20, the female portion 10, and the second male portion 40, which are fitted together, is brought into contact with the coloring agent. The coloring agent flows into the jig 1 through the coloring agent inflow hole 43 provided in the second male portion 40 and is collected in the coloring agent storage portion 123.

If the number of the pinhole forming members 30 to be inserted is the same as the number of the insertion holes 11, the coloring agent collected in the coloring agent storage portion 123 flows into the jig 1 through the coloring agent inflow hole 12 of the female portion 10, gets collected in the coloring agent storage portion 113, and reaches the contact lens L1.

If the number of the pinhole forming members 30 to be inserted is less than the number of the insertion holes 11, the coloring agent collected in the coloring agent storage portion 123 flows into the jig 1 through the coloring agent inflow hole 12 of the female portion 10 and the insertion holes 11 in which the pinhole forming members 30 are not inserted, gets collected in the coloring agent storage portion 113, and reaches the contact lens L1. Therefore, in this case, it is not necessary to provide the coloring agent inflow hole in the female portion.

The method of contact between the jig and the coloring agent is not particularly limited, and examples thereof include immersing the jig in a coloring liquid and injecting the coloring agent from the coloring agent inflow hole. The coloring agent to be used is not particularly limited, and includes, for example, pigments, dyes, and the like. Dyes are preferable in consideration of coloring properties and coloring stability.

Dyes are classified into direct dyes, acid dyes, basic dyes, disperse dyes, reactive dyes, and the like, based on the chemical structure and/or reactivity, but any of them may be used.

Specific examples of the direct dye include Direct S Yellow RL, Direct S Red BWS, Direct Orange S, Direct Bordeaux GS, Direct Blue BB, Direct S Blue 4BL H/C, Direct S Blue BRL 200, Direct Sky Blue 5B, Direct Light Scarlet F2G, Direct Light Rose FR, Direct F Black B160, Sumilight S Blue FBGL, Sumilight S Blue FGL, Kayarus L Yellow F8G, Kayarus S Yellow GLS, Kayarus Yellow PG, Kayarus S Orange 2GL 125%, Kayarus S Brown B2R, Kayarus S Brown GL 125, Kayarus S Brown GTL, Kayarus L Red F5B, Kayarus S Rubin BL, Kayarus S Blue RCL, Kayarus S Blue 4G, Kayarus S Blue BWL 143, Kayarus T Blue GL, Kayarus S Green F4G, Kayarus C Green G, Kayarus S Gray L3R, Kayarus S Gray CGL, Kayarus S Scarlet BNL 200, Kayarus Light Scarlet F2G, Kayarus S Red 6BL 170%, Kayarus S Violet 5BL Conc., Kayarus C Navy Blue CLW, and the like.

Specific examples of the acid dye include Kayanol Yellow NFG, Kayanol Yellow N3R, Kayanol M Yellow 5GW, Kayanol M Yellow O, Kayanol M Yellow 3GW, Kayanol M Scarlet FGW, Kayanol M Red 6BW, Kayanol M Violet FBW, Kayanol M Turquoise Blue 3G, Kayanol M Black VLG, Kayanol M Green 5GW, Kayanol M Green GW, Kayanol Milling Blue GW, Kayanol Milling Blue BW, Kayanol M Violet FBW, Kayanol Milling Black TLB, Aminyl Yellow E-3RL, Aminyl Yellow E-3GL, Aminyl Red E-3BL, Aminyl Blue E-2GL, Kayakalan Scarlet GL, Kayakalan Bordeaux BL, Suminol F Yellow R Conc., Suminol F Yellow 2GP, Suminol F Black BR Conc., Suminol F Yellow G, Suminol M Bordeaux B, Suminol M Brilliant Red B (N) Conc., Suminol M Brilliant Red 3BN Conc., Suminol M Red Brown V Conc., Lanyl Black BG ex/co, Lanyl Brown GR (N), Lanyl Yellow R ex/co, Acid M Red PG, Acid M Red GRA, Acid M Red RS 125, Acid M Red 3BW, Acid Green SS 200, Acid M Green B, Acid Violet 4BNS, Acid M Cyanine 5R, Inola M Yellow NRG-N, Inola Scarlet BA, Inola F Cyanine 6B H/C, Inola F Violet 5B, and the like.

Specific examples of the basic dye include Astra Phloxine FF Conc., Primoflavin 8G, Methyl Violet BB, Methyl Violet Pure SP, Cathilon Yellow 7GLH, Cathilon B Yellow 5GLH 200%, Cathilon Yellow 3GLH 200%, Cathilon Yellow K-3RLH, Cathilon Yellow SGLH, Cathilon Yellow T-RLH, Cathilon Orange GLH 200%, Cathilon B Red 4GH 200%, Cathilon Red 6BH, Cathilon Red 7BNH 200%, Cathilon B Red 3BPH, Cathilon Red CD-FBLH, Cathilon Blue BRLH 200%, Cathilon Blue T-BLH, Cathilon Blue CD-FBLH, Cathilon Blue 3GLH, Cathilon Black CD-BLH, Cathilon Black MH, Cathilon Black NH 200%, Astrazon Yellow 7GLL 200%, Astrazon Yellow 8GSL 200%, Astrazon Yellow GRL 200%, Astrazon Red BBL 200%, Astrazon Red 6B, Astrazon Red CS-N, Astrazon Red GTLN 200% 01, Astrazon Blue BG 200%, Astrazon Blue 5GL 200%, Astrazon Blue AU-N02, Astrazon Black FDL 200% 01, Astrazon Black SW 200% and the like.

Specific examples of the disperse dye include Dianix Br Yellow 5GE, Dianix Br Blue GRE, Dianix Br Navy Blue BNE, Dianix Br Black BNSE, Dianix Yellow 7GL 200%, Dianix Yellow G-FS200, Dianix Red R-E167, Dianix Red BN-SE, Dianix Red G-FS, Dianix Red GR, Dianix Blue 3RLS, Dianix Blue FBL-E, Dianix Black BG-FS 200% 01, Dianix Black HG-FS Conc, Sumikaron Yellow SE5G, Sumikaron Brown G, Sumikaron Khaki GG, Sumikaron Olive MW, Sumikaron Violet S4RL ex/co, Miketon P Orange SF, Miketon P Red BSF, Miketon P Red BLSF, Kayalon P Scarlet RLSF, Kayalon P Rubin GLSE 200%, Kayalon P Black EXSF 200%, and the like.

Specific examples of the reactive dye include Remazol B Yellow 4GL, Remazol B Yellow GL, Remazol Yellow FG 150%, Remazol Yellow GNL, Remazol Yellow GR, Remazol G Yellow G, Remazol G Orange 4G, Remazol B Orange FR, Remazol B Orange 3R, Remazol B Red GG, Remazol B Red BB 150%, Remazol B Red F3B, Remazol Red RHG, Remazol Bold B, Remazol B Violet 5R 90%, Remazol B Blue RKN, Remazol B Blue BB 133%, Remazol Turquoise B, Remazol Turquoise G 133%, Remazol B Green 6B 175%, Remazol Navy RGB 150%, Remazol Black B 150%, Remazol Black DEN, Remazol Black A, Remazol Black B, Sumifix Yellow 2GL 150%, Sumifix Yellow GR 150%, Sumifix G yellow GG 150%, Sumifix Orange 3R 150%, Sumifix Red G 150%, Sumifix Red BB 150%, Sumifix Red BS, Sumifix Red 7BF 25%, Sumifix Blue R, Sumifix Blue KP, Sumifix Turquoise Blue G, Sumifix N Blue EXF, Sumifix Black B 150%, Sumifix Black EX, Sumifix Black EA, Kayacion Yellow P-5G, Kayacion Yellow PN-3R, Mikacion Yellow 8GN, Kayacion Orange PG, Kayacion Brown P-4NR, Kayacion Scarlet P RN, Kayacion Red P-2B, Kayacion Red P-4BN, Kayacion Red A-3B, Kayacion Blue P-3R, Kayacion Blue A-B, Kayacion Navy P-N2R, Kayacion Black P-N, Cibacron Yellow P-6GS, Cibacron Orange P-2R, Cibacron Brown P-6R150, Cibacron Red P-B, Cibacron Red P-4B, Cibacron Red P-6B150, Cibacron Blue P-3R, Cibacron Black PGR 150%, and the like.

As a coloring agent, a diazonium salt compound may be used. Azo coupling performed in, for example, the fixing step described below allows the diazonium chloride compound to have a structure as a dye.

The coloring agent may be used in an appropriate combination irrespective of the type, according to the desired color, or may be used alone. The blending amount of the coloring agent varies depending on the desired tinge, and is not particularly limited. However, for example, the total amount in a solution is 0.01% by weight to 50% by weight, preferably 0.01 % by weight to 20% by weight, and more preferably, 0.5% by weight to 5.0% by weight.

The coloring agent is prepared, for example, by dissolving or dispersing a dye and/or a pigment in a solvent. The property of the solvent may vary depending on the nature of the coloring agent used. Therefore, the solvent is appropriately adjusted and used. Examples of the solvent include water, an organic solvent and the like, which can be used alone or in combination.

If the coloring agent is used under acidic conditions, a general acidic compound is added, and if the coloring agent is used under basic conditions, a general basic compound is added. The contact time between the contact lens and the coloring agent, that is, the coloring time, varies depending on conditions such as the desired tinge, the property of the coloring liquid, and the temperature, and is not particularly limited. However, the coloring time is from several minutes to several hours, and in consideration of damage to the contact lens during coloring, the coloring time is preferably within 5 hours. The reaction temperature is not particularly limited, and is, for example, preferably from 0°C to 100°C, and more preferably from 0°C to 75°C.

By bringing the jig 1 and the coloring agent in contact with each other, a contact lens in which a colored portion and a non-colored portion being a pinhole are formed on the surface is obtained. At this time, a pinhole contact lens having a desired number of pinholes having a desired hole diameter and shape, in accordance with the design content of the pinhole forming member 30, is obtained. The color of the colored portion in the pinhole contact lens is not particularly limited, for example, the color could be black, brown, gray, blue, or the like. However, from the viewpoint of obstructing the light from reaching the eyeball, a color having a large light absorption rate is preferred, and from the viewpoint of making it difficult to externally recognize the pinhole contact lens worn, black, brown, and gray are preferred.

After the jig 1 is brought into contact with the coloring agent, the coloring agent is removed from the jig 1 by washing with water or the like, and then it is preferable to bring the jig 1 into contact with a color fixing agent and perform fixing of the dye on the surface of the contact lens. The color fixing agent is not particularly limited, but may be, for example, a color fixing agent that brings about general alkali fixing, azo coupling, or the like, and may be used properly depending on the type of the coloring agent used. By fixing the dye, it is possible to improve colorfastness, lightfastness, and sharpness of the color tone of the coloring agent on the contact lens base.

After fixing, it is preferable to perform washing to remove the excess coloring agent, color fixing agent, acidic or basic compounds, and the like. Washing is preferably performed using a washing solvent. The washing solvent is not particularly limited, and examples thereof include a solvent capable of dissolving a coloring agent, a color fixing agent, an acidic or basic compound, and the like, and purified water is preferable. As a specific example of washing, the jig 1 is immersed in a sufficient amount of boiling purified water for several minutes to several tens of minutes, and then the jig 1 is washed with running water. Washing may be performed by repeating immersion in boiling water and washing with running water a plurality of times. The immersion time in boiling water is up to 120 minutes. Washing with running water may be omitted, and the jig 1 may be immersed in boiling water more than once.

As a fourth step, the contact lens L1 is taken out from the jig 1. At this time, for example, the first male portion 20 may be detached from the female portion 10, and the contact lens L1 remaining on the first male portion 20 or the female portion 10 may be collected.

The contact lens in which a pinhole is formed by the method according to the first aspect of the present invention is not particularly limited as long as the pinhole is formed using the jig according to an aspect of the present invention. As the contact lens, a contact lens made of a material that does not break when sandwiched between the first male portion 20 and the female portion 10 is preferable, and a soft contact lens is more preferable.

The soft contact lens is not particularly limited. A soft contact lens is obtained, for example, by subjecting a monomer component to a copolymerization reaction. The monomer component may be, for example, a hydrophilic monomer, an acrylic ester monomer, a silicone-containing monomer, a crosslinkable monomer, and the like.

The hydrophilic monomer is not particularly limited as long as the hydrophilic monomer has at least one hydrophilic group. Specific examples of the hydrophilic monomer include N, N-dimethylacrylamide (DMAA), 2-hydroxyethyl methacrylate (HEMA), (meth)acrylic acid, polyethylene glycol monomethacrylate, glycerol methacrylate, N-vinylpyrrolidone (NVP), N-vinyl-N-methylacetamide, N-vinyl-N-ethylacetamide, N-vinyl-N-ethylformamide, N-vinylformamide, and the like. It is possible to use one type of the hydrophilic monomer alone, or use two or more types in combination.

Acrylic ester monomers include linear, branched or cyclic alkyl (meth)acrylates such as methyl (meth)acrylate, ethyl (meth)acrylate, propyl (meth)acrylate, i-propyl (meth)acrylate, N-butyl (meth)acrylate, i-butyl (meth)acrylate, t-butyl (meth)acrylate, 2-ethylhexyl (meth)acrylate, cyclohexyl (meth)acrylate, tridecyl (meth)acrylate, and the like; and fluorine-containing alkyl (meth)acrylates such as trifluoroethyl (meth)acrylate, tetrafluoropropyl (meth)acrylate, octafluoropentyl (meth)acrylate, and the like. It is possible to use one type of the acrylic ester monomer alone, or use two or more types in combination.

Examples of the silicone-containing monomer include a high-molecular-weight silicone monomer, for example, a high-molecular-weight silicone monomer having a linear siloxane bond structure in the molecule. Specific examples of the silicone-containing monomer include silicone-containing monomers having an alkylsiloxy group at the terminal such as α-mono(methacryloxymethyl)polydimethylsiloxane, α,ω-di(methacryloxymethyl)polydimethylsiloxane, α-mono(3-methacryloxypropyl)polydimethylsiloxane, α,ω-di(3-methacryloxypropyl)polydimethylsiloxane, α-mono(3-methacryloxybutyl)polydimethylsiloxane, α,ω-di(3-methacryloxybutyl)polydimethylsiloxane, α-monovinylpolydimethylsiloxane, α,ω-divinylpolydimethylsiloxane polysiloxane macromonomer, 3-tris(trimethylsiloxy)silylmethyl(meth)acrylate, 3-tris(trimethylsiloxy)silylpropyl(meth)acrylate, 3-methylbis(trimethylsiloxy)silylmethyl(meth)acrylate, 3-methylbis(trimethylsiloxy)silylpropyl(meth)acrylate, 3-trimethylsiloxydimethylsilylmethyl(meth)acrylate, 3-trimethylsiloxydimethylsilylpropyl(meth)acrylate, 3-methyldimethoxysilylpropyl(meth)acrylate, and the like. It is possible to use one type of the silicone-containing monomer alone, or use two or more types in combination.

The crosslinkable monomer is not particularly limited as long as the crosslinkable monomer has two or more polymerizable groups in the molecule. Specific examples of the crosslinkable monomer include (meth)acrylate-based crosslinkable monomers such as ethylene glycol di(meth)acrylate, diethylene glycol di(meth)acrylate, triethylene glycol di(meth)acrylate, trimethylolpropane tri(meth)acrylate, pentaerythritol tri(meth)acrylate, and the like, and vinyl-based crosslinkable monomers such as allyl methacrylate, diallyl maleate, diallyl fumarate, diallyl phthalate, triallyl cyanurate, triallyl isocyanurate, diallyl ether, divinylbenzene, and the like.

The contact lens is obtained, for example, by uniformly stirring a desired amount of each monomer component, adding a polymerization initiator, stirring again, and then subjecting the mixture to a copolymerization reaction. Examples of the polymerization initiator include, but are not limited to, azo-based polymerization initiators such as 2,2'-azobisisobutyronitrile, 1,1'-azobis(cyclohexane-1-carbonitrile), 2,2'-azobis(2,4-dimethylvaleronitrile), 2,2'-azobis(2-methylbutyronitrile), and the like, and organic peroxide-based polymerization initiators such as tert-hexyl peroxydecanoate, tert-butyl peroxydecanoate, tert-hexyl peroxypivalate, tert-butyl peroxypivalate, and the like.

To impart the desired ultraviolet absorbing ability, an ultraviolet absorber such as 2-hydroxy-4-(meth)acryloyloxybenzophenone, 2-hydroxy-4-(meth)acryloyloxy-5-t-butylbenzophenone, 2-(2'-hydroxy-5'-(meth)acryloyloxyethylphenyl)-2H-benzotriazole, 2-(2'-hydroxy-5'-(meth)acryloyloxyethylphenyl)-5-chloro-2H-benzotriazole, phenyl 2-hydroxy-4-methacryloyloxymethylbenzoate, or the like may be added.

In manufacturing of a contact lens, it is possible to adopt a well-known method such as a method in which a monomer component is subjected to a copolymerization reaction by placing in a molding die to result in the desired shape, and a method in which a monomer component is subjected to a copolymerization reaction in a tube-shaped container, and then the contact lens is cut and/or polished into the desired shape.

### [Method according to Second Aspect]

By using the jig according to the second aspect of the present invention and the jig according to the fifth aspect of the present invention, it is possible to simultaneously form pinhole contact lenses using two contact lenses.

That is, by using the jig according to the second aspect of the present invention or the jig according to the fifth aspect of the present invention, and performing the steps below, it is possible to form two pinhole contact lenses:
inserting the pinhole forming member into the insertion hole;
fitting together the first male portion and the female portion, so that a first contact lens is sandwiched between a part of the leading end of the protruding portion in the first male portion and the engagement portion provided in the recessed portion of the female portion, and fitting together the second male portion and the female portion, so that a second contact lens is sandwiched between a part of the leading end of the protruding portion in the second male portion and the engagement portion provided in the recessed portion of the female portion;
bringing the jig including the first male portion, the female portion, and the second male portion, which are fitted together, into contact with a coloring liquid to form a colored portion and a non-colored portion being a pinhole on the surface of the first and second contact lenses; and
removing the first and the second contact lenses from the pinhole contact lens forming jig.

### [Method according to Third Aspect]

The method according to the third aspect of the present invention is a method of forming a pinhole contact lens using the jig according to the sixth aspect of the present invention, and includes:
inserting the pinhole forming member into the insertion hole;
fitting together the first male portion and the female portion, so that a contact lens is sandwiched between a part of the leading end of the protruding portion in the first male portion and the engagement portion provided in the recessed portion of the female portion;
bringing the jig including the first male portion and the female portion, which are fitted together, into contact with a coloring agent to form a colored portion and a non-colored portion being a pinhole on the surface of the contact lens; and
removing the contact lens from the jig.

Hereinafter, the present invention will be described in more detail with reference to examples. However, the present invention is not limited to the examples herein, and the present invention can have various aspects as long as it is possible to solve the object of the present invention.

### Examples

### [1. Forming Contact Lens]

### (1-1) Contact lens 1/Hydrous Soft Contact Lens

A monomer mixed solution was obtained by stirring and mixing a monomer solution containing 98% by weight of 2-hydroxyethyl methacrylate (HEMA) and 2% by weight of ethylene glycol dimethacrylate (EDMA) at room temperature for 30 minutes so as to become homogeneous. To the monomer mixed solution thus obtained, 0.5 parts by weight of 2,2'-azobisisobutyronitrile (AIBN) was added as a polymerization initiator, and the mixture was sufficiently stirred and mixed.

The obtained mixed solution was poured into a polypropylene contact lens mold, and subjected to a copolymerization reaction in which the mixture was heated at 70°C for 10 hours in a nitrogen atmosphere. A lens-shaped copolymer was obtained from inside the mold.

The obtained copolymer was washed with ethanol to remove residual raw materials and subjected to swelling. The copolymer after undergoing swelling was placed in a phosphate buffer (pH 8.0) to obtain a hydrous soft contact lens having a lens diameter of 14.2 mm and a base curve of 8.70 mm.

### (1-2) Contact Lens 2/Silicone-Containing Hydrous Soft Contact Lens

A monomer solution was obtained by adding tert-butyl alcohol (t-BuOH) to a solution containing 30% by weight of α,ω-di(3-methacryloxypropyl)polydimethylsiloxane, 60% by weight of 2-hydroxyethyl methacrylate (HEMA), 8% by weight of tridecyl methacrylate (TDMA), and 2% by weight of ethylene glycol dimethacrylate (EDMA) so that the weight of t-BuOH with respect to the solution became 60% by weight, and a monomer mixed solution was obtained by stirring and mixing the monomer solution at room temperature for 30 minutes so as to become homogeneous. To the monomer mixed solution thus obtained, 0.5 parts by weight of tert-butyl peroxy neodecanoate (t-BuND) as a polymerization initiator was added, and the mixture was sufficiently stirred and mixed.

The obtained mixed solution was treated in the same manner as in (1-1) above to obtain a silicone-containing hydrous soft contact lens having a lens diameter of 14.0 mm and a base curve of 8.90 mm.

### [2. Coloring Contact Lens]

### (2-1) Pinhole Contact Lens 1 Having Single-Diameter Pinholes

The jig 1 having the dimensions shown in Table 1 and consisting of the female portion 10, the first male portion 20, the pinhole forming member 30, and the second male portion 40, as illustrated in FIGS. 4 and 5 and FIGS. 6A to 6C was used. 53 pinhole forming members 30 were inserted into 53 insertion holes 11 from the bottom surface of the recessed portion 120 on the lower surface side of the female portion 10 toward the bottom surface of the recessed portion 110 on the upper surface side so that the leading end of the column-shaped portion 31 passed through the insertion hole 11, and the peripheral edge of the column-shaped portion 32 came into contact with the bottom surface of the recessed portion 120.

Next, after placing the contact lens 1 formed above in (1-1) on the engagement portion 111 with the front surface facing upward, the female portion 10 and the male portions 20 and 40 were fitted together to sandwich the contact lens L1, and the jig 1 was thus obtained.

A coloring liquid and a color fixing liquid having the compositions shown in Table 2 were prepared.

The jig 1 in which the contact lens L1 had been sandwiched was immersed in the coloring liquid 1 at 5°C in a beaker having a capacity of 500 mL and allowed to stand in a refrigerator at 5°C for 60 minutes.

The jig 1 was taken out of the coloring liquid 1, washed entirely with running water, and then immersed in the color fixing liquid 1 placed in a 500 mL beaker, and allowed to stand at room temperature for 60 minutes.

The jig 1 was taken out of the color fixing liquid 1, washed entirely with running water, and then immersed in boiling purified water placed in a 500 mL beaker, and allowed to stand for 60 minutes. The purified water in the beaker was replaced, the jig 1 was again immersed in boiling purified water, and allowed to stand for 60 minutes to obtain a pinhole contact lens 1. FIG. 14 illustrates a schematic view of the pinhole contact lens 1.

### (2-2) Pinhole Contact Lens 2 Having Pinholes of Different Diameters

A pinhole contact lens 2 was obtained in the same manner as the pinhole contact lens 1 described above in (2-1) except that, out of the insertion holes 11, for eight insertion holes 11 positioned on the outermost periphery, the pinhole forming members 30 were inserted from the recessed portion 110 on the upper surface side of the female portion 10, and a coloring liquid 2 and color fixing liquid 2 were used.

FIG. 15 illustrates a schematic view of the pinhole contact lens 2.

**[Table 1]**

| Jig 1 | |
|---|---|
| Female portion 10 | |
| First outer diameter (mm): X1 | 8.5 |
| Second outer diameter (mm): Y1 | 16.0 |
| Depth of insertion hole (mm): A1 | 5.0 |
| Height of storage portion (mm): A10 | 5.0 |
| Height of storage portion (mm): A20 | 5.0 |
| Depth to engagement portion (mm): B10 | 2.0 |
| Depth to engagement portion (mm): B20 | 2.0 |

| Configuration of insertion hole | |
|---|---|
| Diameter (mm): T3 | 0.7 |
| Quantity (number of holes) | 53 |
| Inflow hole diameter (mm): T4 | 1.0 |

| Male portion 20 | |
|---|---|
| Height of protruding portion (mm): C10 | 2.0 |

| Pinhole forming member 30 | |
|---|---|
| Diameter of column-shaped portion (mm): T1 | 0.6 |
| Diameter of column-shaped portion (mm): T2 | 0.8 |
| Height of column-shaped portion (mm): P1 | 10.0 |
| Height of column-shaped portion (mm): P2 | 5.0 |
| Overall length (mm): Q1 | 15.0 |

| Male portion 40 | |
|---|---|
| Height of protruding portion (mm): D10 | 2.0 |
| Diameter of inflow hole (mm): T5 | 1.0 |

**[Table 2]**

| Components | Coloring liquid 1 | Coloring liquid 2 | Fixing liquid 1 | Fixing liquid 2 |
|---|---|---|---|---|
| Diazo No. 10* | 8.00 g | - | - | - |
| Remazol Red RHG | - | 14.70 g | - | - |
| Remazol Black B | - | 5.00 g | - | - |
| Mikacion Yellow 8GN | - | 6.50 g | - | - |
| Citric acid | 30.00 g | | - | - |
| Sodium sulfate | - | 10.00 g | - | - |
| Sodium carbonate | - | 0.75 g | 20.00 g | 50.00 g |
| Phloroglucinol | - | - | 10.00 g | - |
| Purified water | 1000 mL | 1000 mL | 1000 mL | 1000 mL |

| | | | | |
|---|---|---|---|---|
| *2,5-diethoxy-4-(4'-tolylmercapto)benzendiazonium chloride-zinc chloride (1/2) (diazo compound) | | | | |

### Reference Signs List

- 1: Jig
- 10: Female portion
- 11: Insertion hole
- 12 to 14: Coloring agent inflow hole
- 110: Recessed portion on upper surface side
- 111: Engagement portion
- 112: Engaging portion
- 113: Coloring agent storage portion
- 114: Central portion dyeing member mounting part
- 120: Recessed portion on lower surface side
- 121: Engagement portion
- 122: Engaging portion
- 123: Coloring agent storage portion
- 20: First male portion
- 21: Protruding portion
- 22: Flange portion
- 30: Pinhole forming member
- 31 to 32: Column-shaped portions
- 40: Second male portion
- 41: Protruding portion
- 42: Flange portion
- 43: Coloring agent inflow hole
- 50: Central portion dyeing member
- L1 to L2: Contact lens
- A1: Depth of insertion hole
- A10 to A20: Height of coloring agent storage portion
- B10: Height from upper surface of female portion to engagement portion
- B20: Height from lower surface of female portion to engagement portion
- C10 to D10: Height of protruding portion
- T1 to T2: Diameter of column-shaped portion
- T3: Diameter of insertion hole
- T4 to T5: Diameter of coloring agent inflow hole
- P1 to P2: Height of column-shaped portion
- Q1: Height of pinhole forming member
- X1: First outer diameter of female portion
- Y1: Second outer diameter of female portion

### Industrial Applicability

According to the present invention, it is possible to efficiently and stably manufacture a pinhole contact lens having a desired number and positions of pinholes, and thus the present invention can be used for supplying the pinhole contact lens on an industrial scale.

## Claims

1. A pinhole contact lens forming jig (1) for forming a pinhole in a contact lens (L1), the jig (1) comprising:
a first male portion (20) and a second male portion (40);
a female portion (10); and
a pinhole forming member (30), wherein
the pinhole forming member (30) includes a first column-shaped portion (31) having a first outer diameter (T1), and a second column-shaped portion (32) having a second outer diameter (T2) larger than the first outer diameter (T1), the first and second column-shaped portions (31, 32) being vertically stacked on each other,
the second male portion (40) includes a coloring agent inflow hole (43) extending through a protruding portion (41) from a leading end to a rear end of the protruding portion (41),
the female portion (10) includes
recessed portions (110, 120) on an upper surface side and a lower surface side, the recessed portions (110, 120) being designed to be fittable to a protruding portion (21) of the first male portion (20) and the protruding portion (41) of the second male portion (40), respectively, and
an insertion hole (11) into which the pinhole forming member (30) is to be inserted, the insertion hole (11) extending through the recessed portions (110, 120) on the upper surface side and the lower surface side, and having a diameter (T3) larger than the first outer diameter (T1) and smaller than the second outer diameter (T2),
the recessed portions (110, 120) of the female portion (10) include, on the inner side thereof, an engagement portion (111, 121) to be in contact with a part of the leading end of the protruding portion (21, 41) of the respective male portions (20, 40) to be fitted,
the first male portion (20) and the female portion (10) are designed so that, if the first male portion (20) and the female portion (10) are fitted together, the contact lens (L1) is sandwiched between a part of the leading end of the protruding portion (21) of the first male portion (20) and the engagement portion (111), and
the pinhole forming member (30) is designed so that if the pinhole forming member (30) is inserted into the insertion hole (11) from the lower surface side of the female portion (10), an end of the first column-shaped portion (31) comes into surface contact with the contact lens (L1) sandwiched between the first male portion (20) and the female portion (10), and an end of the second column-shaped portion (32) comes into surface contact with the leading end of the protruding portion (41) of the second male portion (40).

2. The jig (1) according to claim 1, wherein
the female portion (10) includes a coloring agent inflow hole (12) through which a coloring agent flows, the coloring agent inflow hole (12) extending through the recessed portions (110, 120) on the upper surface side and the lower surface side.

3. A pinhole contact lens forming jig (1) for forming a pinhole in a contact lens (L1), the jig (1) comprising:
a first male portion (20) and a second male portion (40);
a female portion (10); and
a pinhole forming member (30), wherein
the pinhole forming member (30) includes a first column-shaped portion (31) having a first outer diameter (T1), and a second column-shaped portion (32) having a second outer diameter (T2) larger than the first outer diameter (T1), the first and second column-shaped portions (31, 32) being vertically stacked on each other,
the female portion (10) includes
recessed portions (110, 120) on an upper surface side and a lower surface side, the recessed portions (110, 120) being designed to be fittable to a protruding portion (21) of the first male portion (20) and a protruding portion (41) of the second male portion (40), respectively,
an insertion hole (11) into which the pinhole forming member (30) is to be inserted, the insertion hole (11) extending through the recessed portions (110, 120) on the upper surface side and the lower surface side, and having a diameter (T3) larger than the first outer diameter (T1) and smaller than the second outer diameter (T2), and
a coloring agent inflow hole (13) through which a coloring agent flows, the coloring agent inflow hole (13) extending through a side surface portion,
the recessed portions (110, 120) of the female portion (10) include, on the inner side thereof, an engagement portion (111, 121) to be in contact with a part of a leading end of the protruding portion (21, 41) of the respective male portions (20, 40) to be fitted,
the first male portion (20) and the female portion (10) are designed so that, if the first male portion (20) and the female portion (10) are fitted together, the contact lens (L1) is sandwiched between a part of the leading end of the protruding portion (21) of the first male portion (20) and the engagement portion (111), and
the pinhole forming member (30) is designed so that if the pinhole forming member (30) is inserted into the insertion hole (11) from the lower surface side of the female portion (10), an end of the first column-shaped portion (31) comes into surface contact with the contact lens (L1) sandwiched between the first male portion (20) and the female portion (10), and an end of the second column-shaped portion (32) comes into surface contact with the leading end of the protruding portion (41) of the second male portion (40).

4. The jig (1) according to claim 3, wherein
the female portion (10) includes a coloring agent inflow hole (12) through which the coloring agent flows, the coloring agent inflow hole (12) extending through the recessed portions (110, 120) on the upper surface side and the lower surface side.

5. A pinhole contact lens forming jig (1) for forming a pinhole in a contact lens (L1), the jig (1) comprising:
a first male portion (20) and a second male portion (40);
a female portion (10); and
a pinhole forming member (30), wherein
the female portion (10) includes
recessed portions (110, 120) on an upper surface side and a lower surface side, the recessed portions (110, 120) being designed to be fittable to a protruding portion (21) of the first male portion (20) and a protruding portion (41) of the second male portion (40), respectively, and
an insertion hole (11) into which the pinhole forming member (30) is to be inserted, the insertion hole (11) extending through the recessed portions (110, 120) on the upper surface side and the lower surface side,
the recessed portions (110) on the upper surface side of the female portion (10) include, on the inner side thereof, an engagement portion (111) to be in contact with a part of a leading end of the protruding portion (21) of the first male portion (20) to be fitted,
the second male portion (40) and the female portion (10) include a coloring agent inflow hole (12, 43) through which a coloring agent flows, the coloring agent inflow hole (12, 43) being designed, if the second male portion (40) and the female portion (10) are fitted together, to be a through hole extending from the lower surface side of the second male portion (40) to the recessed portion (110) on the upper surface side of the female portion (10),
the first male portion (20) and the female portion (10) are designed so that, if the first male portion (20) and the female portion (10) are fitted together, the contact lens (L1) is sandwiched between a part of the leading end of the protruding portion (21) of the first male portion (20) and the engagement portion (111), and
the pinhole forming member (30) is designed so that if the pinhole forming member (30) is inserted into the insertion hole (11), one of leading ends of the pinhole forming member (30) comes into surface contact with the contact lens (L1) sandwiched between the first male portion (20) and the female portion (10), and the other of leading ends of the pinhole forming member (30) comes into surface contact with the leading end of the protruding portion (41) of the second male portion (40).

6. A pinhole contact lens forming jig (1) for forming a pinhole in a contact lens (L1), the jig (1) comprising:
a first male portion (20) and a second male portion (40);
a female portion (10); and
a pinhole forming member (30), wherein
the female portion (10) includes
recessed portions (110, 120) on an upper surface side and a lower surface side, the recessed portions (110, 120) being designed to be fittable to a protruding portion (21) of the first male portion (20) and a protruding portion (41) of the second male portion (40), respectively,
an insertion hole (11) into which the pinhole forming member (30) is to be inserted, the insertion hole (11) extending through the recessed portions (110, 120) on the upper surface side and the lower surface side, and
a coloring agent inflow hole (13) through which a coloring agent flows, the coloring agent inflow hole (13) extending through a side surface portion,
the recessed portions (110) on the upper surface side of the female portion (10) include, on the inner side thereof, an engagement portion (111) to be in contact with a part of a leading end of the protruding portion (21) of the first male portion (20) to be fitted,
the first male portion (20) and the female portion (10) are designed so that, if the first male portion (20) and the female portion (10) are fitted together, the contact lens (L1) is sandwiched between a part of the leading end of the protruding portion (21) of the first male portion (20) and the engagement portion (111), and
the pinhole forming member (30) is designed so that if the pinhole forming member (30) is inserted into the insertion hole (11), one of leading ends of the pinhole forming member (30) comes into surface contact with the contact lens (L1) sandwiched between the first male portion (20) and the female portion (10), and the other of leading ends of the pinhole forming member (30) comes into surface contact with the leading end of the protruding portion (41) of the second male portion (40).

7. A pinhole contact lens forming jig (1) for forming a pinhole in a contact lens (L1), the jig (1) comprising:
a first male portion (20) and a second male portion (40);
a female portion (10); and
a pinhole forming member (30), wherein
the female portion (10) includes
recessed portions (110, 120) on an upper surface side and a lower surface side, the recessed portions (110, 120) being designed to be fittable to a protruding portion (21) of the first male portion (20) and a protruding portion (41) of the second male portion (40), respectively,
an insertion hole (11) into which the pinhole forming member (30) is to be inserted, the insertion hole (11) extending through the recessed portions (110, 120) on the upper surface side and the lower surface side, and
a coloring agent inflow hole (13, 14) through which a coloring agent flows, the coloring agent inflow hole (13, 14) extending through a side surface portion,
the recessed portions (110, 120) of the female portion (10) include, on the inner side thereof, an engagement portion (111, 121) to be in contact with a part of a leading end of the protruding portion (21, 41) of the respective male portions (20, 40) to be fitted,
the first male portion (20) and the female portion (10) are designed so that, if the first male portion (20) and the female portion (10) are fitted together, the contact lens (L1) is sandwiched between a part of the leading end of the protruding portion (21) of the first male portion (20) and the engagement portion (111), and
the pinhole forming member (30) is designed so that if the pinhole forming member (30) is inserted into the insertion hole (11), one of leading ends of the pinhole forming member (30) comes into surface contact with the contact lens (L1) sandwiched between the first male portion (20) and the female portion (10), and the other of leading ends of the pinhole forming member (30) comes into surface contact with the leading end of the protruding portion (41) of the second male portion (40).

8. The jig (1) according to claim 7, wherein
the female portion (10) includes a coloring agent inflow hole (12) through which the coloring agent flows, the coloring agent inflow hole (12) extending through the recessed portions (110, 120) on the upper surface side and the lower surface side.

9. A pinhole contact lens forming jig (1) for forming a pinhole in a contact lens (L1), the jig (1) comprising:
a first male portion (20);
a female portion (10); and
a pinhole forming member (30), wherein
the female portion (10) includes
a recessed portion (110) designed to be fittable to a protruding portion (21) of the first male portion (20),
an insertion hole (11) into which the pinhole forming member (30) is to be inserted, and
a coloring agent inflow hole (13) through which a coloring agent flows, the coloring agent inflow hole (13) extending through a side surface portion,
the recessed portion (110) of the female portion (10) include, on the inner side thereof, an engagement portion (111) to be in contact with a part of a leading end of the protruding portion (21) of the first male portion (20) to be fitted,
the first male portion (20) and the female portion (10) are designed so that, if the first male portion (20) and the female portion (10) are fitted together, the contact lens (L1) is sandwiched between a part of the leading end of the protruding portion (21) of the first male portion (20) and the engagement portion (111), and
the pinhole forming member (30) is designed so that if the pinhole forming member (30) is inserted into the insertion hole (11), one of leading ends of the pinhole forming member (30) comes into surface contact with the contact lens (L1) sandwiched between the first male portion (20) and the female portion (10).

10. A method of forming a pinhole contact lens using the jig (1) according to any one of claims 1 to 8, the method comprising:
inserting the pinhole forming member (30) into the insertion hole (11);
fitting together the first male portion (20) and the female portion (10), so that a contact lens (L1) is sandwiched between a part of the leading end of the protruding portion (21) in the first male portion (20) and the engagement portion (111) provided in the recessed portion (110) of the female portion (10), and fitting together the second male portion (40) and the female portion (10);
bringing the jig (1) including the first male portion (20), the female portion (10), and the second male portion (40), which are fitted together, into contact with a coloring agent to form a colored portion and a non-colored portion being a pinhole on the surface of the contact lens (L1); and
removing the contact lens (L1) from the jig (1).

11. A method of forming a pinhole contact lens using the jig (1) according to claim 4 or 8, the method comprising:
inserting the pinhole forming member (30) into the insertion hole (11);
fitting together the first male portion (20) and the female portion (10), so that a first contact lens (L1) is sandwiched between a part of the leading end of the protruding portion (21) in the first male portion (20) and the engagement portion (111) provided in the recessed portion (110) of the female portion (10), and fitting together the second male portion (40) and the female portion (10), so that a second contact lens (L2) is sandwiched between a part of the leading end of the protruding portion (41) in the second male portion (40) and the engagement portion (121) provided in the recessed portion (120) of the female portion (10);
bringing the jig (1) including the first male portion (20), the female portion (10), and the second male portion (40), which are fitted together, into contact with a coloring liquid to form a colored portion and a non-colored portion being a pinhole on the surface of the first and second contact lenses (L1, L2); and
removing the first and the second contact lenses (L1, L2) from the pinhole contact lens forming jig (1).

12. A method of forming a pinhole contact lens using the jig (1) according to claim 9, the method comprising:
inserting the pinhole forming member (30) into the insertion hole (11);
fitting together the first male portion (20) and the female portion (10), so that a contact lens (L1) is sandwiched between a part of the leading end of the protruding portion (21) in the first male portion (20) and the engagement portion (111) provided in the recessed portion (110) of the female portion (10);
bringing the jig (1) including the first male portion (20) and the female portion (10), which are fitted together, into contact with a coloring agent to form a colored portion and a non-colored portion being a pinhole on the surface of the contact lens (L1); and
removing the contact lens (L1) from the jig (1).
